# EUROPEAN PATENT SPECIFICATION

(11) **EP 4 367 537 B1**
(45) Date of publication and mention of the grant of the patent: **08.04.2026**
(21) Application number: 22734328.2
(22) Date of filing: 01.07.2022
(51) Int. Cl.: G02B 6/02, H01S 3/067

(54) **OPTICAL FIBER**
GLASFASER
FIBRE OPTIQUE

(30) Priority: 08.07.2021 EP 21184622
(43) Date of publication of application: 15.05.2024
(73) Proprietor: NKT Photonics A/S, 3460 Birkerød (DK)
(72) Inventor: MICHIELETTO, Mattia, 3460 Birkerød (DK); PEDERSEN, Martin Erland Vestergaard, 3460 Birkerød (DK); MAACK, Martin, 3460 Birkerød (DK); JOHANSEN, Mette Marie, 3460 Birkerød (DK)
(74) Representative: Zacco Denmark A/S
(86) International application number: PCT/EP2022/068284
(87) International publication number: WO 2023/280712

(56) References cited:
- US-A1- 2010 226 614
- US-A1- 2013 114 129
- JØRGENSEN METTE M ET AL: "Design optimization of the distributed modal filtering rod fiber for increasing single mode bandwidth", FIBER LASERS IX: TECHNOLOGY, SYSTEMS, AND APPLICATIONS, SPIE, 1000 20TH ST. BELLINGHAM WA 98225-6705 USA, vol. 8237, no. 1, 8 March 2012 (2012-03-08), pages 1 - 10, XP060023433, DOI: 10.1117/12.908246

## Description

The present disclosure relates to an optical fiber for guiding an optical signal.

US 8 903 214 B2 describes a large core area optical fiber for guiding an optical signal. The optical fiber has a longitudinal, optical axis and a cross section perpendicular thereto, and comprises a core region which is capable of guiding an optical signal in a fundamental core mode with an effective refractive index, n_{c} , at an optical signal wavelength, λ₁. The fiber has a cladding region surrounding the core region. The cladding region comprises an inner cladding region and an outer cladding region. The inner cladding region comprises a background material having a refractive index, n_{b} , and a plurality of inner cladding features arranged in said background material. A plurality of said plurality of inner cladding features are of a first type of feature. The first type of feature comprises an air hole surrounded by a high-index region comprising a high-index material having a refractive index, nᵣ , that is larger than the refractive index of the inner cladding background material, and the first type of feature supports an optical mode with an effective refractive index, n₁ , which is lower than or equal to the effective refractive index of the fundamental core mode, n_{c} , at said optical signal wavelength, λ₁. The core region has a maximum cross-sectional dimension of more than about 40 µm, and the index difference between the high-index material and the background material of the inner cladding is below about 1·10⁻².

US 2013/0114129 A1 describes a single-mode optical fiber for guiding an optical signal, wherein the core region is capable of guiding an optical signal in a fundamental core mode at an optical signal wavelength. A cladding region is arranged to surround the core region and includes an inner cladding region and an outer cladding region. The inner cladding region includes a background material and a plurality of inner cladding features arranged in the background material, wherein a plurality of the plurality of inner cladding features are of a first type of feature that includes an air hole surrounded by a high-index region comprising a high-index material that is larger than the refractive index of the inner cladding background material.

A distributed modal filtering (DMF) rod fiber design is described in the scientific article by Jørgensen, Mette Marie, et al. "Design optimization of the distributed modal filtering rod fiber for increasing single mode bandwidth." Fiber Lasers IX: Technology, Systems, and Applications. Vol. 8237. SPIE, 2012. The DMF rod fiber has high index ring-shaped inclusions acting as resonators enabling single-mode (SM) guidance through modal filtering of higher order modes (HOMs).

It is an object of the present invention to provide an improved optical fiber, in particular an optical fiber which has, inter alia, a better modal performance.

The object is satisfied by an optical fiber in accordance with the independent claim.

Preferred embodiments of the present invention are described in the dependent claims.

The set of first type of feature can be regarded as "corner resonators".

According to the claimed invention, the corner resonators are designed differently than the "normal" first type of features that are surrounded by six nearest neighbours of the second type of feature. Specifically, the corner resonators are designed such that they support the optical mode with the effective refractive index, n₁ at an optical signal wavelength, λ₁. Thus, they can provide the same modal properties as the other first type of features and therefore act as if they were surrounded by six nearest neighbours of the second type of feature. They also can be designed to have the effective refractive index, n₁, at the optical signal wavelength, λ₁. but dispersion can be different.

At least in some embodiments, the set of first type of feature is located in a radially outermost layer of inner cladding features centered around the core, such that, when viewed radially, all the first type of feature surrounded by six nearest neighbors of said second type of feature are arranged radially inward of the radially outermost layer.

At least in some embodiments, the optical fiber is a single-mode optical fiber.

At least in some embodiments, the core region has a core effective refractive index, the core effective refractive index being substantially equal to the refractive index of the inner cladding background material.

At least in some embodiments, the core region comprises a material doped with at least one active element. The optical fiber has several applications, such as for amplification of an optical signal. The amplification of an optical signal propagating in the core region may be due to the presence of an active element, which transfers energy from the pump light to the signal light. The active element may comprise a rare earth element selected from the group of Ytterbium (Yb), Erbium (Er), Praseodymium (Pr), Neodynium (Nd), Holmium (Ho), Thulium (Tm), Dysprosium (Dy), or combinations thereof, such as a combination of Erbium (Er) and Ytterbium (Yb).

The material doped with an active element may be arranged in different ways in the core region. In some embodiments, the active material is substantially homogenously distributed over the core region. The active part may at least partly be comprised within said core region and/or within said inner cladding region. In some embodiments, the active region comprises an annular shaped region. The annular shaped region may comprise a coherent ring surrounding the centre of said core region.

In some embodiments, the concentration of the active element may gradually change over the core region cross section. The concentration may also be such that there is a substantially higher concentration in e.g. a circular or annular formed part of the core region and a smaller concentration in another part or the core region. In that case, the phrase "the active part" of the core region may refer to the part of the core region wherein the concentration is highest.

At least in some embodiments, the refractive index of the material doped with active element(s) may be influenced by the presence of the active element(s). By adding one or more additional dopants, the refractive index may be adjusted. In some embodiments, the material doped with active elements have a refractive index profile below or substantially equal to the refractive index of said inner cladding background material.

At least in some embodiments, the material doped with an active element is substantially arranged in an active part of said core region wherein said active part is arranged so that the fundamental core mode has a modal field overlap with the active part, which is above about 50%, or above about 60%, or above about 70%, or above about 80%. In some embodiments, the overlap can be between 50% and 80%, preferably between 50% and 60% or between 50% and 70%.

At least in some embodiments, said core region is doped with one or more materials selected from the group of Fluorine (F), Germanium (Ge), Boron (B), Thorium (Th), Chlorine (CI), Bromine (Br), Iodine (I), and Cerium (Ce), or combinations of these.

At least in some embodiments, a diameter, d₁, of said air hole of said first type of feature is such that the d₁ /Λ ratio is below about 0.3 or below about 0.2. The ratio can be between 0.02 and 0.2, preferably between 0.08 and 0.15.

At least in some embodiments, high-index region of said first type of feature comprises germanium doped silica. Any other suitable element which increases the refractive index of e.g. the background material the can also be used.

At least in some embodiments, the core region has a maximum cross-sectional dimension of more than about 40 µm.

At least in some embodiments, the core region corresponds to a number of cells in the hexagonal lattice, the number being any number between 7 and 37, such as 7, 19, or 37.

In some embodiments, for a fiber having an Ytterbium (Yb) doped core and a high index region of said first type of feature which comprises Germanium (Ge) as a dopant, the pitch of such a fiber can be between 10 µm and 20 µm, preferably between 14 µm and 16 µm, the diameter of the air holes can be between 0.5 µm to 3 µm, and the thickness of the high index region can be between 1 µm and 5 µm.

In some embodiments, for a fiber having a Thulium (Tm) doped core and a high index region of said first type of feature which comprises Germanium (Ge) as a dopant, the pitch of such a fiber can be between 20 µm and 40 µm, preferably between 25 µm and 33 µm, the diameter of the air holes can be between 1 µm to 6 µm, and the thickness of the high index region can be between 2 µm and 10 µm.

At least in some embodiments, the index difference between the high-index material and the background material of the inner cladding is below about 1·10⁻².

The following embodiments aim to improve the modal properties of optical fibers containing corner resonators by modifying the refractive index of the material in regions in proximity to the corner resonators. The modification is configured to provide that the optical mode(s) supported by the corner resonators are confined in a manner similar to the mode(s) supported by a first type of feature surrounded by 6 second type of features. With similar confinement the effective refractive index and/or the modal dispersion of the optical modes supported by the corner resonators can equal that of the optical modes supported by the first type of features.

In some embodiments, the outer cladding region may comprise an outer background material having the refractive index, n_{ob}, and a set of down-doped regions having a refractive index n_{dd} that is lower than the refractive index of the outer cladding background material whereby the supported optical mode(s) are confined in a manner similar to the confinement of the mode(s) supported by the first type of feature provided by the presence of 6 neighboring second type of features .

In some embodiments, the set of down-doped regions may be proximal to the set of first type of features.

In some embodiments, the set of down-doped regions may form a down-doped ring in the outer cladding region.

In some embodiments, the down-doped regions are formed by doping the outer background material with boron or fluorine.

In some embodiments, n_{dd} is in the range of n_{ob} - 2·10⁻⁴ to just below n_{ob}, i.e. the down-doped regions have a refractive index which is lower than the refractive index of the outer background material by up to 2·10⁻⁴.

In some embodiments, the down-doped regions are located at a distance from the radially outermost inner cladding features which is less than 2 times the pitch of the hexagonal lattice, such as 0**.**5 to 2 times the pitch.

In some embodiments, the outer cladding region comprises an air cladding. The air cladding can e.g. provide confinement of a pump light propagating through the optical fiber for exciting active elements in the fiber core.

The air cladding can be located such that the optical mode(s) supported by any corner resonator are confined in a manner similar to the confinement of the mode(s) supported by a first type of feature provided by the presence of 6 neighboring second type of features. In some embodiments, the distance from the radially outermost inner cladding features to the air cladding is in the range of 0.2 to 2 times the pitch of the hexagonal lattice of the inner cladding.

The disclosure of US 8 903 214 B2 relates to an optical fiber of the prior art.

Preferred embodiments of the present invention will now be described by way of example only and with reference to the accompanying drawings in which:
- Fig. 1: shows a cross-sectional view of an optical fiber as described in US 8 903 214 B2;
- Fig. 2: shows a cross-sectional view of a variant of an optical fiber not according to the claimed invention;
- Fig. 3: shows a cross-sectional view of a further variant of an optical fiber not according to the claimed invention;
- Figs. 4a, b: show graphs of the ratio between light in the fiber core and total light over wavelength for a fiber (Fig. 4a) not covered by the present invention and a fiber (Fig. 4b) covered by the present invention; and
- Figs. 5a, b: show an effective index over wavelength for a fiber (Fig. 5a) not covered by the present invention and a fiber (Fig. 5b) covered by the present invention.
- Fig. 6: shows a cross-sectional view of a further variant of an optical fiber in accordance with the present invention;
- Fig. 7: shows a cross-sectional view of a yet further variant of an optical fiber in accordance with the present invention;
- Fig. 8: shows a cross-sectional view of a further variant of an optical fiber in accordance with the present invention;
- Fig. 9: shows a cross-sectional view of a yet further variant of an optical fiber in accordance with the present invention.

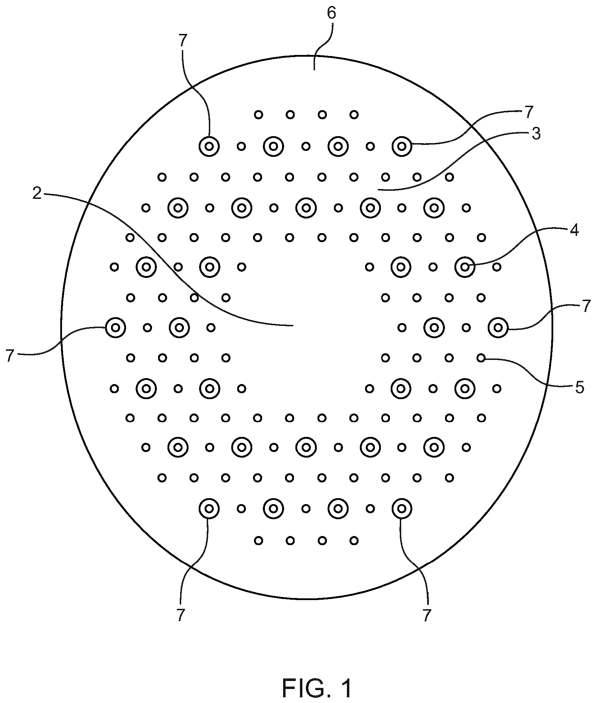

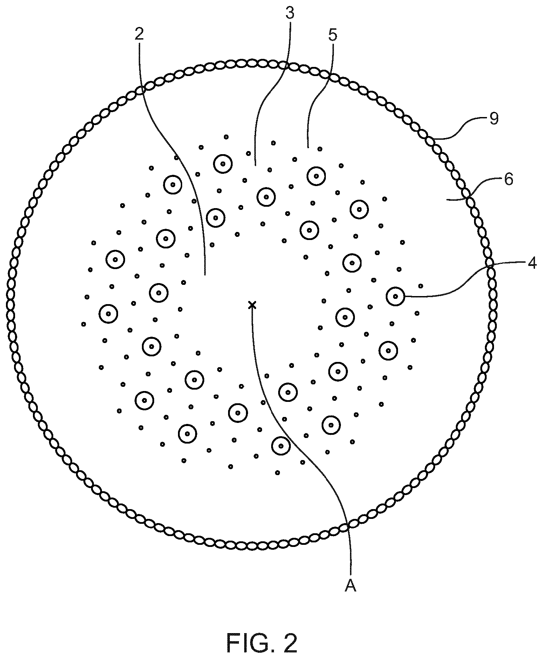

Fig.1 corresponds to Fig. 2 of US 8 903 214 B2 and shows a design of an optical fiber which has a core 2, an inner cladding region 3 surrounding the core 2, and an outer cladding region 6 surrounding the inner cladding region 3.

All inner cladding features are arranged in the inner cladding region 3. A part of inner cladding features are of a first type of feature 4 and a part are of a second type of feature 5. The inner cladding features are arranged in a hexagonal lattice and the nearest neighbour of all first type of feature 4 are inner cladding features of the second type of feature 5.

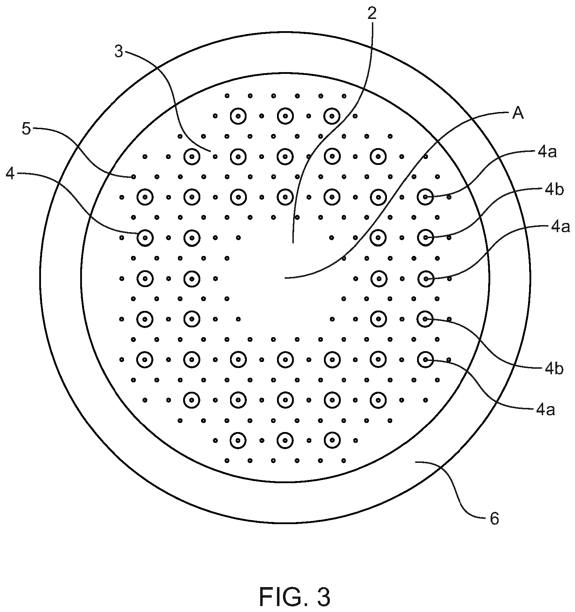

The core region 2 corresponds to 19 cells in the hexagonal lattice (see also in Fig. 3). The number of 19 is only a specific example and other numbers of cells are possible.

The arrangement of the first type of feature 4 defines a honeycomb-like or kagome lattice. Each of the first type of feature 4 comprises an air hole (center part) surrounded by a high-index region (surrounding part) which is formed substantially as a cylindrical structure having a ring formed cross sectional area.

The second type of feature 5 is made of an air hole surrounded by the inner cladding material. In some embodiment, the pitch of the hexagonal lattice is 14.5 µm and the thickness of the high-index region is approximately 4 µm, and the air hole diameter of the first and second type of feature is approximately 2 µm.

The fiber as shown in Fig. 1 comprises at the radially outer region of the inner cladding 3 inner cladding features of the first type of feature 4 that are not surrounded by 6 nearest neighbours of the second type of feature 5, in contrast to the inner cladding features of the first type of feature 4 that are arranged radially inside the outermost circumferential row or layer of inner cladding features of the second type of feature 5. Such inner cladding features of the first type of feature 4 that are not surrounded by 6 nearest neighbours of the second type of feature 5 are called corner resonators 7.

The corner resonators 7 can have a tendency to go off-wavelength compared to the inner cladding features of the first type of feature 4 that are surrounded by six nearest neighbors of the second type of feature 5, and the corner resonators 7 can in particular decrease the modal performance of the optical fiber.

The optical fiber of Fig. 2, does not have such corner resonators 7. Furthermore, in the example of Fig. 2, the region 6 comprises an air cladding 9 and the fiber can optionally further comprise a polymer cladding surrounding the outer cladding region 6 (not shown).

Thus, Fig. 2 shows a cross sectional view of an optical fiber for guiding an optical signal, which has a longitudinal, optical axis A and a cross section perpendicular thereto. The fiber comprises a core region 2 being capable of guiding an optical signal in a fundamental core mode with an effective refractive index, n_{c}, at an optical signal wavelength, λ₁. The fiber has a cladding region surrounding the core region 2. The cladding region comprises an inner cladding region 3 and an outer cladding region 6. The inner cladding region 3 comprises a background material having a refractive index, n_{b}, and a plurality of inner cladding features 4, 5 arranged in said background material. A plurality of the plurality of inner cladding features are of a first type of feature 4 which comprise an air hole surrounded by a high-index region comprising a high-index material having a refractive index, nᵣ , that is larger than the refractive index of the inner cladding background material. The first type of feature 4 supports an optical mode with an effective refractive index, n₁ , which is lower than or equal to the effective refractive index of the fundamental core mode, n_{c}, at said optical signal wavelength, λ₁. A plurality of the plurality of inner cladding features are of a second type of feature 5 comprising an air hole in direct contact with the background material having a refractive index, n_{b}. The inner cladding features 4,5 are arranged in a substantially hexagonal lattice and the six nearest neighbours surrounding a first type of feature 4 are of said second type of feature 5. Since no first type of feature 4 is surrounded by less than six nearest neighbours of the second type of feature 5 there are no corner resonators 7 as in the fiber of Fig. 1, in the fiber of Fig. 2.

Therefore, in the optical fiber of Fig. 2, inner cladding features of the first type of feature 4 are always surrounded by six nearest neighbours which are inner cladding features of the second type of features 5. As the corner resonators 7 (see Fig. 1) are not present in the optical fiber of Fig. 2, the unit cell around each first type of feature 4 is identical.

Thus, all first type of features 4 in this optical fiber supports modes with identical or at least very similar modal properties. This in turn enables a better modal performance with a more efficient suppression of higher order modes in the core region and thus a larger bandwidth for operation of the optical fiber.

The fiber of Fig. 3 differs from the fiber of Fig. 2 in that the inner cladding features of the first type of feature 4 are arranged in a rectangular arrangement. However, as in Fig. 2, the inner cladding features 4, 5 are arranged in a substantially hexagonal lattice and the six nearest neighbours surrounding a first type of feature 4 are of the second type of feature 5. No first type of feature 4 is surrounded by less than six nearest neighbours of the second type of feature 5.

The fiber of Fig. 3 does not have an air cladding, in contrast to the fiber of Fig. 2, see air cladding 9.

For the moment it is assumed that the groups of first type of features 4a, 4b shown in Fig. 3 have the same properties.

In the fibers of Figs. 2 and 3, in a radially outer circumferential layer or row of inner cladding features centered around the fiber core 2 no first type of inner cladding feature 4 is present, such that, when viewed radially, all inner cladding features of the first type of feature 4 are arranged radially inward of the radially outer layer which only includes second type of inner cladding features 5. Correspondingly, in a radially inner layer or row of inner cladding features circumferentially centered around the core 2, no inner cladding features of the first type of feature 4 are present, such that, when viewed radially, all inner cladding features of the first type of feature 4 are arranged radially outward of the radially innermost layer or row of inner cladding features of the second type 5.

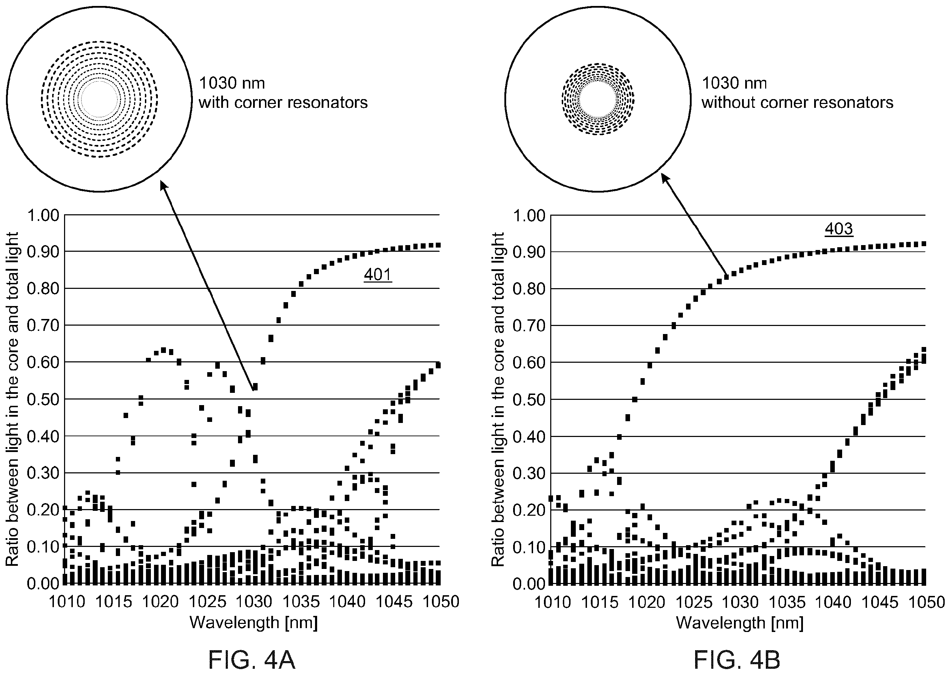

Fig. 4a shows a calculated diagram of the ratio between light in the fiber core and total light for fiber modes propagating in the fiber in dependence on the wavelength in nanometer (nm) for a fiber, such as a fiber designed in accordance with Fig. 1, which is not covered by the present invention. Fig. 4b shows a calculated diagram of the ratio between light in the fiber core and total light for fiber modes propagating in the fiber in dependence on the wavelength in nanometer (nm) for a fiber, such as a fiber designed according to Figs. 2 or 3. The optical modes are unspecified in Figs. 4a and b. Each dot indicates a ratio for an unspecified mode at a certain wavelength.

As can be seen in Fig. 4a, in a wavelength range between about 1032 nm and 1038 nm, the fiber of Fig. 4a shows in essence a single-mode behaviour as only one fiber mode, which is usually the LP₀₁-mode, has a high ratio for the light in the core with respect to the total light, see curve 401 in Fig. 4a. As an example, the high ratio can be defined to be above 0.7, whereas all other modes have a ratio below 0.25 in the mentioned wavelength range. The optical modes with a low ratio couple far better out of the core into the cladding of the fiber and dissipate.

The fiber can be said to show single-mode behaviour in a wavelength range in which only one mode has a high ratio for the light in the core with respect to the total light, whereas all other modes have a low ratio in the same wavelength region. The high ratio can be set to be above 0.7. The low ratio can be set to be below 0.25.

The curve 403 as shown in Fig. 4b shows a smoother behaviour than curve 401, indicating that a fiber in accordance with Fig. 2 or Fig. 3 has an improved modal behaviour. Further, the single mode behaviour is extended below 1032 nm down to about 1023 nm. The optical signal wavelength, λ₁, can be in the middle of the wavelength range where single mode-behaviour occurs, for example at around 1030 nm in Fig. 4b.

In the fibers according to Figs. 2 and 3, all of the inner cladding features of the first type of feature 4 preferably have identical modal properties. The high-index regions of all first type of features 4 can be doped in the same way when the fiber is produced. The high-index regions are depicted by the outer rings encircling an inner circle, which is an air hole of the first type of features 4 in Figs. 2 and 3.

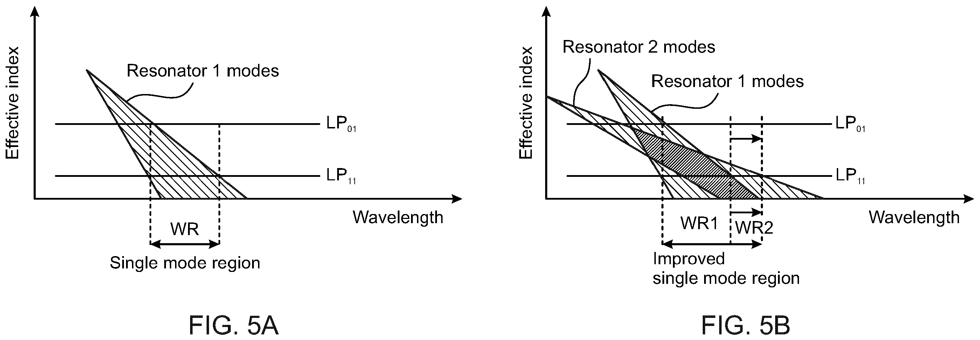

Fig. 5a shows the effective index over wavelength for a fiber as shown in Fig. 2 or 3. It can be seen that the fiber shows a single-mode behaviour in a wavelength region WR. The effective index of the LP₁₁-mode is lower than the effective index of the LP₀₁ mode.

In some embodiments, the plurality of inner cladding features of the first type of feature 4 is divided into at least a first group of first type of features 4a and a second group of first type of features 4b. This is indicated as an example in Fig. 3, where the first type of features in essence alternate between being a first type of feature of the first group 4a and the second group 4b.

The first type of features of the first group 4a are designed to have a different modal dispersion than the ones of the second group 4b. For example, the first type of features of the first group 4a are configured to delocalize higher order core modes, in particular the LP₁₁-modes, in a first wavelength region WR1 (see Fig. 5b), and the first type of features of the second group 4b are configured to delocalize higher order core modes, in particular the LP₁₁-modes, in a higher second wavelength region WR2, which is adjacent to or partially overlapping with the first wavelength region WR1.

The first type of features of the first group 4a can include first type of features with high-index regions that are doped differently than the high-index regions of the first type of features of the second group 4b. The size of a doping area in the high index regions and/or the doping level in the high index regions of the first type of features can also differ between the first group 4a and the second group 4b. The required doping levels and/or the size of the doping area can be determined numerically prior to producing the fiber. The fiber can then be produced such that it shows a behaviour as depicted in Fig. 5b.

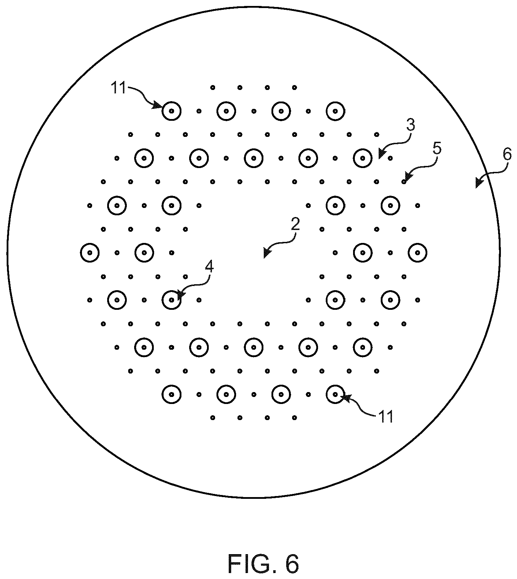

Referring to Fig. 6, a fiber is illustrated and comprises a set of first type of features 11 that are surrounded by less than six nearest neighbours of the second type of feature 5. Each of the first type of features of the set 11 supports an optical mode with at least approximately the effective refractive index, n₁, at an optical signal wavelength, λ₁, that is also supported by the "proper" first type of features 4 that are surrounded by six nearest neighbours of the second type of feature 5. Thereby, a behaviour as shown in Figs. 4b and 5a, b can be obtained by properly choosing, for example, the doping level of the first type of features of the set 11 in view of the doping level of the "proper" first type of features 4. The outer cladding region 6 may comprise an air cladding (not shown) located in a radially outermost layer of the outer cladding region 6.

In some embodiments, and as shown in Fig. 6, the set of first type of features 11 is located in a radially outermost layer of inner cladding features centered around the core 2. Thus, when viewed radially, all of the first type of feature 4 surrounded by six nearest neighbours of said second type of feature 5 are arranged radially inward of the radially outermost layer.

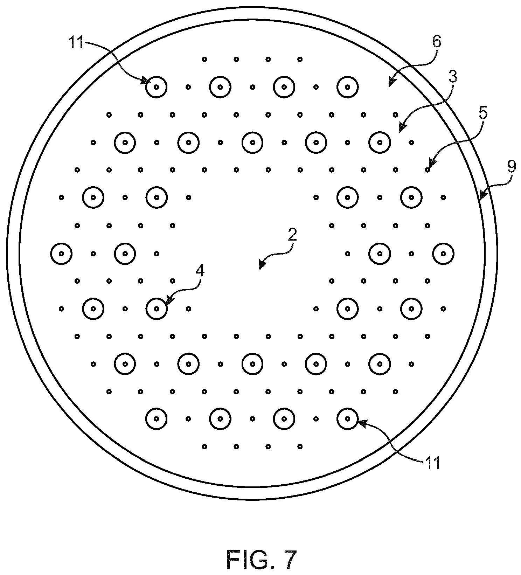

Fig. 7 illustrates an embodiment in which the optical fiber of Fig. 6 comprises an air cladding 9 forming part of the outer cladding region 6 where the distance between the inner cladding region 3 and the air cladding 9 is optimized to ensure confinement of the modes supported by a set of first type of features 11 which are surrounded by less than six nearest neighbors of the second type of feature 5. With appropriate distance between the air cladding 9 and features of the set of first type of features 11, the electric field of the optical modes supported by the set of first type of features 11 and thereby the effective refractive index and the modal dispersion of these first type of features can be matched to that of the "proper" first type of features 4 surrounded by six nearest neighbors of the second type of feature 5.

In this way, the modal properties of the fiber are adjusted and the behavior as shown in Figs. 4b and 5a, b is obtained with the appropriate proximity of the air cladding 9 to the set of first type of features 11. The reduction of the air cladding size and the diameter is a way to mitigate the influence of the corner resonators on the modal properties of the optical fiber.

Preferably, the distance between the features of the set of first type of features 11 to the air cladding 9 is in the order of the pitch of the hexagonal lattice of the inner cladding (the pitch is defined as a distance between centers of two adjacent air-holes formed in the inner cladding). The distance may e.g. be 0.5 to 2 times the pitch. For an optical fiber as the one illustrated in Fig. 7 having a hexagonal lattice with 11 periods of inner cladding features across the inner cladding, the inner diameter of the air cladding 9 may be in the order of 12 to 16 times the pitch of the lattice.

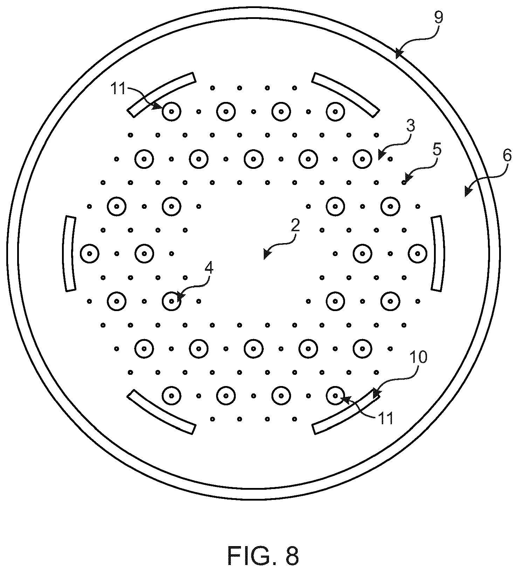

Fig. 8 shows another embodiment of the optical fiber in which the outer cladding region 6 comprises an outer background material having the refractive index, n_{ob}, and further comprises a set of down-doped regions 10 having a refractive index n_{dd} that is lower than the refractive index of the outer cladding background material. The outer background material may be the same as the background material of the inner cladding region 3. Alternatively, the outer background material may be of a material different from the background material of the inner cladding region 3. The outer background material may be silica. Typically, the set of down-doped regions 10 is proximal to the set of first type of features 11, such as at distance of 1 to 2 times the pitch of the hexagonal lattice of the inner cladding. The down-doped regions 10 may be formed by doping the outer background material with boron or fluorine.

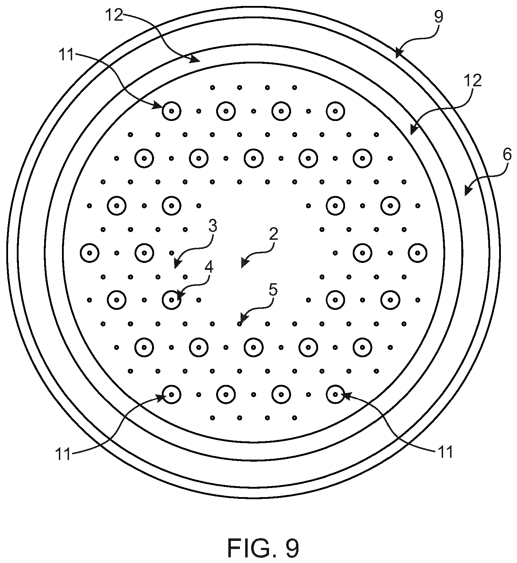

Fig. 9 illustrates and embodiment in which the down-doped regions are connected into a down-doped ring 12 formed in the outer cladding region 6. The down-doped ring 12 may be formed by doping the outer background material with boron or fluorine.

The refractive index n_{dd} of the down-doped regions have a lower refractive index to compensate for the missing air-holes 4. A reduction in the refractive index is rather low and in the order of -1·10⁻⁵. Preferably, the index change may be at least around -5·10⁻⁶. In this way the down doped regions may be used for pump confinement. To solving the issue with corner resonators the down-doped regions may have the refractive index which is lower than the refractive index of the outer cladding region for just above 0 and up to -2·10⁻⁴.

By down-doping the regions proximal to the corner resonators 11 the modal properties of the fiber are adjusted and the behavior as shown in Figs. 4b and 5a, b is obtained as the proximity lowered refractive index close to the corner resonators 11 changes the electric field around the corner resonators 11 and thereby the effective refractive index and the modal dispersion of the set 11 of the first type of features.

### Reference signs

- 2: core
- 3: inner cladding region
- 4: first type of feature
- 4a: first type of feature of first group
- 4b: first type of feature of second group
- 5: second type of feature
- 6: outer cladding region
- 7: corner resonator
- 9: air cladding
- 10: down-doped regions
- 11: set of first type of features
- 12: down-doped ring
- 401: curve
- 403: curve
- A: optical axis
- WR: wavelength region
- WR1: first wavelength region
- WR2: second wavelength region

## Claims

1. An optical fiber for guiding an optical signal, said optical fiber having a longitudinal, optical axis and a cross section perpendicular thereto, said optical fiber comprising:
a core region (2) being capable of guiding an optical signal in a fundamental core mode with an effective refractive index, n_{c}, at an optical signal wavelength, λ₁;
a cladding region surrounding the core region, the cladding region comprising an inner cladding region (3) and an outer cladding region (6), said inner cladding region comprising a background material having a refractive index, n_{b}, and a plurality of inner cladding features arranged in said background material, wherein a plurality of said plurality of inner cladding features are of a first type of feature (4), said first type of feature comprising an air hole surrounded by a high-index region comprising a high-index material having a refractive index, nᵣ, that is larger than the refractive index of the inner cladding background material, said first type of feature supports an optical mode with an effective refractive index, n₁, which is lower than or equal to the effective refractive index of the fundamental core mode, n_{c}, at said optical signal wavelength, λ₁,
wherein a plurality of said plurality of inner cladding features are of a second type of feature (5) comprising an air hole in direct contact with the background material having a refractive index, n_{b}, and
wherein said inner cladding features are arranged in a substantially hexagonal lattice and the six nearest neighbors surrounding a first type of feature are of said second type of feature, and
wherein the cladding region further includes a set of first type of features (11) whereof each first type of feature of the set is surrounded by less than six nearest neighbors of the second type of feature, and
**characterized in that** each first type of feature of the set is designed to support the optical mode with the effective refractive index, n₁, at an optical signal wavelength, λ₁.

2. The optical fiber of claim 1,
wherein the set of first type of feature (11) is located in a radially outermost layer of inner cladding features centered around the core, such that, when viewed radially, all of the first type of feature (4) surrounded by six nearest neighbors of said second type of feature (5) are arranged radially inward of the radially outermost layer.

3. The optical fiber of claim 1 or 2,
wherein the outer cladding region (6) comprises an outer background material having the refractive index, n_{ob}, and further comprises a set of down-doped regions (10) having a refractive index n_{dd} that is lower than the refractive index of the outer cladding background material.

4. The optical fiber of claim 3,
wherein the set of down-doped regions (10) is proximal to the set of first type of features (11).

5. The optical fiber of claim 3 or 4,
wherein the set of down-doped regions forms a down-doped ring (12) in the outer cladding region (6).

6. The optical fiber of claims 3-5,
wherein the down-doped regions (10) are formed by doping the outer background material with boron or fluorine.

7. The optical fiber of claims 3-6,
wherein the down-doped regions (10) have a refractive index which is lower than the refractive index of the outer background material by up to 2·10⁻⁴.

8. The optical fiber of claims 1-7,
wherein the outer cladding region (6) comprises an air cladding (9) located at a distance of 0.2 to 2 times a pitch of the hexagonal lattice of the inner cladding from the nearest inner cladding features.

9. The optical fiber of claims 1-2,
wherein the doping level of the set of first type of features (11) is chosen such that the first type of features of the set (11) supports the optical mode with the effective refractive index, n₁, at an optical signal wavelength, λ₁.

10. The optical fiber of claims 1-9,
wherein the set of first type of features (11) is configured to provide the same modal properties as the other first type of features (4).

11. The optical fiber of claims 1-10,
wherein the index difference between the high-index material and the background material of the inner cladding is below about 1·10⁻².

12. The optical fiber of claims 1-11,
wherein the core region comprises a material doped with at least one active element arranged in an active part of said core region wherein said active part is arranged so that the fundamental core mode has a modal field overlap with the active part, which is above about 50 %.

## Patentansprüche

1. Glasfaserleiter zum Führen eines optischen Signals, wobei der Glasfaserleiter eine longitudinale optische Achse und einen dazu senkrechten Querschnitt aufweist, wobei der Glasfaserleiter umfasst:
eine Kernregion (2), die dazu in der Lage ist, ein optisches Signal in einem Kerngrundmodus mit einem effektiven Brechungsindex, n_{c}, bei einer optischen Signalwellenlänge, λ₁, zu führen;
eine die Kernregion umgebende Mantelregion, wobei die Mantelregion eine innere Mantelregion (3) und eine äußere Mantelregion (6) umfasst, wobei die innere Mantelregion ein Hintergrundmaterial mit einem Brechungsindex, n_{b}, und eine Mehrzahl innerer Mantelmerkmale umfasst, die in dem Hintergrundmaterial angeordnet sind, wobei eine Mehrzahl der Mehrzahl innerer Mantelmerkmale von einem ersten Merkmalstyp (4) ist, wobei der erste Merkmalstyp ein Luftloch umfasst, das von einer Hochindexregion umgeben ist, die ein Hochindexmaterial mit einem Brechungsindex, nᵣ, umfasst, der größer ist als der Brechungsindex des Hintergrundmaterials des inneren Mantels, wobei der erste Merkmalstyp einen optischen Modus mit einem effektiven Brechungsindex, n₁, unterstützt, der kleiner oder gleich dem effektiven Brechungsindex des Kerngrundmodus, n_{c}, bei der optischen Signalwellenlänge, λ₁, ist,
wobei eine Mehrzahl der Mehrzahl innerer Mantelmerkmale von einem zweiten Merkmalstyp (5) ist, der ein Luftloch in direktem Kontakt mit dem Hintergrundmaterial mit einem Brechungsindex, n_{b}, umfasst, und
wobei die inneren Mantelmerkmale in einem im Wesentlichen hexagonalen Gitter angeordnet sind und die sechs nächsten Nachbarn, die einen ersten Merkmalstyp umgeben, von dem zweiten Merkmalstyp sind, und
wobei die Mantelregion ferner eine Menge von Merkmalen eines ersten Typs (11) beinhaltet, wobei jeder erster Merkmalstyp der Menge von weniger als sechs nächsten Nachbarn des zweiten Merkmalstyps umgeben ist, und
**dadurch gekennzeichnet, dass** jeder erste Merkmalstyp der Menge so ausgelegt ist, dass es den optischen Modus mit dem effektiven Brechungsindex, n₁, bei einer optischen Signalwellenlänge, λ₁, unterstützt.

2. Glasfaserleiter nach Anspruch 1,
wobei die Menge von Merkmalen eines ersten Typs (11) in einer radial äußersten Schicht innerer Mantelmerkmale angeordnet ist, die um den Kern zentriert sind, sodass, radial betrachtet, der erste Merkmalstyp (4), der von sechs nächsten Nachbarn des zweiten Merkmalstyps (5) umgeben ist, zur Gänze radial einwärts der radial äußersten Schicht angeordnet sind.

3. Glasfaserleiter nach Anspruch 1 oder 2,
wobei die äußere Mantelregion (6) ein äußeres Hintergrundmaterial mit dem Brechungsindex, n_{ob}, umfasst und ferner eine Menge von abdotierten Regionen (10) mit einem Brechungsindex, n_{dd}, umfasst, der kleiner als der Brechungsindex des Hintergrundmaterials des äußeren Mantels ist.

4. Glasfaserleiter nach Anspruch 3,
wobei die Menge abdotierter Regionen (10) in der Nähe der Menge von Merkmalen eines ersten Typs (11) angeordnet ist.

5. Glasfaserleiter nach Anspruch 3 oder 4,
wobei die Menge abdotierter Regionen einen abdotierten Ring (12) in der äußeren Mantelregion (6) bildet.

6. Glasfaserleiter nach den Ansprüchen 3 bis 5,
wobei die abdotierten Regionen (10) durch Dotieren des äußeren Hintergrundmaterials mit Bor oder Fluor gebildet sind.

7. Glasfaserleiter nach den Ansprüchen 3 bis 6,
wobei die abdotierten Regionen (10) einen Brechungsindex aufweisen, der bis zu 2·10⁻⁴ niedriger als der Brechungsindex des äußeren Hintergrundmaterials ist.

8. Glasfaserleiter nach den Ansprüchen 1 bis 7,
wobei die äußere Mantelregion (6) einen Luftmantel (9) umfasst, der in einem
Abstand von den nächstgelegenen inneren Mantelmerkmalen angeordnet ist, der dem 0,2- bis 2-Fachen
einer Gitterkonstante des hexagonalen Gitters des inneren Mantels entspricht.

9. Glasfaserleiter nach den Ansprüchen 1 bis 2,
wobei der Dotierungsgrad der Menge von Merkmalen eines ersten Typs (11) so gewählt ist, dass der erste Merkmalstyp der Menge (11) den optischen Modus mit dem effektiven Brechungsindex, n1, bei einer optischen Signalwellenlänge, λ₁, unterstützt.

10. Glasfaserleiter nach den Ansprüchen 1 bis 9,
wobei die Menge von Merkmalen eines ersten Typs (11) so ausgelegt ist, dass sie dieselben Modeneigenschaften wie der andere erste Merkmalstyps (4) bereitstellt.

11. Glasfaserleiter nach den Ansprüchen 1 bis 10,
wobei die Indexdifferenz zwischen dem Hochindexmaterial und dem Hintergrundmaterial des inneren Mantels unter etwa 1·10⁻² liegt.

12. Glasfaserleiter nach den Ansprüchen 1 bis 11,
wobei die Kernregion ein mit mindestens einem aktiven Element dotiertes Material umfasst, das in einem aktiven Teil der Kernregion angeordnet ist, wobei der aktive Teil so angeordnet ist, dass der Kerngrundmodus eine Modenfeldüberlappung mit dem aktiven Teil aufweist, die über etwa 50 % liegt.

## Revendications

1. Fibre optique pour guider un signal optique, ladite fibre optique ayant un axe optique longitudinal et une section transversale perpendiculaire à celui-ci, ladite fibre optique comprenant :
une région de cœur (2) capable de guider un signal optique dans un mode de cœur fondamental avec un indice de réfraction effectif, n_{c}, à une longueur d'onde de signal optique, λ₁ ;
une région de gaine entourant la région de cœur, la région de gaine comprenant une région de gaine interne (3) et une région de gaine externe (6), ladite région de gaine interne comprenant un matériau de fond ayant un indice de réfraction, n_{b}, et une pluralité d'éléments de gaine interne agencés dans ledit matériau de fond, dans laquelle une pluralité de ladite pluralité d'éléments de gaine interne sont d'un premier type d'élément (4), ledit premier type d'élément comprenant un trou d'air entouré par une région à haut indice comprenant un matériau à haut indice ayant un indice de réfraction, nᵣ, qui est supérieur à l'indice de réfraction du matériau de fond de la gaine interne, ledit premier type d'élément supporte un mode optique avec un indice de réfraction effectif, n₁, qui est inférieur ou égal à l'indice de réfraction effectif du mode de cœur fondamental, n_{c}, à ladite longueur d'onde de signal optique, λ₁,
dans laquelle une pluralité de ladite pluralité d'éléments de gaine interne sont d'un second type d'élément (5) comprenant un trou d'air en contact direct avec le matériau de fond ayant un indice de réfraction, n_{b}, et
dans laquelle lesdits éléments de gaine interne sont agencés selon un réseau sensiblement hexagonal et les six plus proches voisins entourant un premier type d'élément sont dudit second type d'élément, et
dans laquelle la région de gaine inclut en outre un ensemble d'éléments du premier type (11) dont chaque élément du premier type de l'ensemble est entouré par moins de six plus proches voisins du second type d'élément, et
**caractérisée en ce que** chaque élément du premier type de l'ensemble est conçu pour supporter le mode optique avec l'indice de réfraction effectif, n₁, à une longueur d'onde de signal optique, λ₁.

2. Fibre optique selon la revendication 1,
dans laquelle l'ensemble d'éléments du premier type (11) est situé dans une couche radialement la plus externe d'éléments de gaine interne centrée autour du cœur, de sorte que, lorsqu'ils sont vus radialement, tous les éléments du premier type (4) entourés par six plus proches voisins dudit second type d'élément (5) sont agencés radialement vers l'intérieur de la couche radialement la plus externe.

3. Fibre optique selon la revendication 1 ou 2,
dans laquelle la région de gaine externe (6) comprend un matériau de fond externe ayant un indice de réfraction, n_{ob}, et comprend en outre un ensemble de régions dopées négativement (10) ayant un indice de réfraction n_{dd} qui est inférieur à l'indice de réfraction du matériau de fond de la gaine externe.

4. Fibre optique selon la revendication 3,
dans laquelle l'ensemble de régions dopées négativement (10) est proximal de l'ensemble d'éléments du premier type (11).

5. Fibre optique selon la revendication 3 ou 4,
dans laquelle l'ensemble de régions dopées négativement forme un anneau dopé négativement (12) dans la région de gaine externe (6).

6. Fibre optique selon les revendications 3 à 5,
dans laquelle les régions dopées négativement (10) sont formées par dopage du matériau de fond externe avec du bore ou du fluor.

7. Fibre optique selon les revendications 3 à 6,
dans laquelle les régions dopées négativement (10) ont un indice de réfraction qui est inférieur à l'indice de réfraction du matériau de fond externe jusqu'à 2 10⁻⁴.

8. Fibre optique selon les revendications 1 à 7,
dans laquelle la région de gaine externe (6) comprend une gaine d'air (9) située à
une distance de 0,2 à 2 fois un pas du réseau hexagonal de la gaine interne
à partir des éléments de gaine interne les plus proches.

9. Fibre optique selon les revendications 1 à 2,
dans laquelle le niveau de dopage de l'ensemble d'éléments du premier type (11) est choisi de sorte que les éléments du premier type de l'ensemble (11) supportent le mode optique avec l'indice de réfraction effectif, n₁, à une longueur d'onde de signal optique, λ₁.

10. Fibre optique selon les revendications 1 à 9,
dans laquelle l'ensemble d'éléments du premier type (11) est configuré pour fournir les mêmes propriétés modales que les autres éléments du premier type (4).

11. Fibre optique selon les revendications 1 à 10,
dans laquelle la différence d'indice entre le matériau à haut indice et le matériau de fond de la gaine interne est inférieure à environ 1 10⁻².

12. Fibre optique selon les revendications 1 à 11,
dans laquelle la région de cœur comprend un matériau dopé avec au moins un élément actif agencé dans une partie active de ladite région de cœur, dans laquelle ladite partie active est configurée de sorte que le mode de cœur fondamental présente un chevauchement de champ modal avec la partie active qui est supérieur à environ 50 %.
